# EUROPÄISCHE PATENTSCHRIFT

(11) **EP 3 004 584 B1**
(45) Veröffentlichungstag und Bekanntmachung des Hinweises auf die Patenterteilung: **18.09.2019**
(21) Anmeldenummer: 14728499.6
(22) Anmeldetag: 27.05.2014
(51) Int. Cl.: F01P 7/16, F01P 7/14, F01P 3/02, G05D 23/02

(54) **THERMOSTATVENTIL**
THERMOSTATIC VALVE
VANNE THERMOSTATIQUE

(30) Priorität: 28.05.2013 DE 102013209965
(43) Veröffentlichungstag der Anmeldung: 13.04.2016
(73) Patentinhaber: Mahle International GmbH, 70376 Stuttgart (DE)
(72) Erfinder: AUWEDER, Andreas, 71665 Vaihingen/Enz (DE); MARX, Jürgen, 71672 Marbach (DE); WILLERS, Eike, 70469 Stuttgart (DE)
(74) Vertreter: Grauel, Andreas
(86) Internationale Anmeldenummer: PCT/EP2014/060990
(87) Internationale Veröffentlichungsnummer: WO 2014/191429

(56) Entgegenhaltungen:
- EP-A1- 0 431 256
- EP-A2- 1 024 257
- WO-A1-2008/029029
- WO-A1-2013/178797
- DE-A1-102004 037 488
- GB-A- 1 376 202
- JP-A- S5 797 014

## Beschreibung

### Technisches Gebiet

Die Erfindung betrifft ein Thermostatventil nach dem Oberbegriff von Anspruch 1 und ein Kühlsystem für einen Motor eines Kraftfahrzeuges.

### Stand der Technik

Thermostatventile sind im Stand der Technik bekannt und werden in einem Kühlsystem eines flüssigkeitsgekühlten Verbrennungsmotors zur Regelung eines Kühlmittelkreislaufes mit dem Ziel eingesetzt, möglichst schnell die optimale Temperatur im Verbrennungsmotor zu erreichen, diese unter allen Betriebsbedingungen zu halten und eine Überhitzung im Motor zu verhindern. Dies ist für die Lebensdauer, den Kraftstoffverbrauch und die Abgasentwicklung des Verbrennungsmotors besonders wichtig. Das Thermostatventil wird in der Regel bei zu geringer Motortemperatur nach dem Start oder bei zu geringer Belastung während der Fahrt des Kraftfahrzeuges als ein 3/2-Wegeventil im Kühlmittelkreislauf eingesetzt. Durch das Thermostatventil fließt das aus dem Motor ausströmende Kühlmittel nicht durch einen Kühler des Kühlmittelkreislaufes, sondern direkt über eine Kurzschlussleitung wieder zum Motor zurück.

Aus der EP 2019915 B1 ist ein Thermostatventil für eine Kühlanlage eines Verbrennungsmotors bekannt, welches ein in einer Mischkammer angeordnetes thermostatisches Arbeitselement aufweist. Das thermostatische Antriebselement dient als Antriebselement für ein zwischen der Mischkammer und einem Anschluss eines Kühlmittelkühlers anzuordnendes Hauptventilelement und für zwei Kurzschlussventilelemente, die vor der Mischkammer anzuordnen sind und die derart relativ zu einem Ventilsitz angeordnet sind, dass bei einer Ausfahrbewegung des thermostatischen Arbeitselementes das zunächst geschlossene Kurzschlussventilelement öffnet und das andere auf Grund einer Schiebereinheit bei weiterer Ausfahrbewegung wieder schließt. Hierbei ist ein gemeinsames Kurzschlussventilelement vorgesehen, das einen als Kurzschlussventilschieber dienenden Abschnitt und einen in Ausfahrrichtung des thermostatischen Arbeitselementes vorgeschalteten Kurzschlussventilteller aufweist, zwischen denen ein gemeinsamer Ventilsitz vorgesehen ist. Ferner ist zwischen dem gemeinsamen Ventilsitz ein zur Mischkammer hin öffnendes Überdruckventil vorgesehen.

Die EP 2021595 zeigt ebenfalls ein Thermostatventil für eine Kühlanlage eines Verbrennungsmotors mit einem in einer Ventilkammer anzuordnenden thermostatischen Arbeitselement, das als Antriebselement für ein zwischen einem Motoraustritt und einem zu einem Kühlmittelkühler führenden Anschluss anzuordnendes Hauptventilelement und für ein zwischen dem Motoraustritt und einem Motoreintritt anzuordnendes, als Ventilschieber gestaltetes Kurzschlussventilelement dient, das eine Überdruckfunktion besitzt. Hierbei ist vorgesehen, dass das Kurzschlussventilelement zusätzlich zu dem Ventilschieber mit einem Ventilteller versehen ist, der in Ausfahrrichtung des thermostatischen Arbeitselementes dem Ventilschieber zugeordnet ist. Ferner ist dem Ventilschieber und dem Ventilteller ein Bauteil zugeordnet, das sowohl einen Ventilsitz für den Ventilschieber als auch einen Ventilsitz für den Ventilteller bildet.

Thermostatventile, mit einem Schieber mit zwei Schieberabschnitten zum Verschließen jeweils einer Öffnung, sind aus der DE102004037488A1 und aus der EP0431256A1 bekannt.

Es ist die Aufgabe der Erfindung, ein Thermostatventil der eingangs genannten Art weiterzuentwickeln. Das zu schaffende Thermostatventil soll konstruktiv einfach aufgebaut und in einem begrenzten Bauraum einsetzbar sein.

Dies wird erreicht mit einem Thermostatventil mit den Merkmalen von Anspruch 1.

Ein Ausführungsbeispiel der Erfindung betrifft ein Thermostatventil für ein Kühlsystem eines Motors eines Kraftfahrzeugs, welches ein Thermostatventilgehäuse aufweist, an dem ein Anschluss an einen Zylinderkopf des Motors, ein Anschluss an einen Motorblock, ein Anschluss an einen Kühler des Kühlsystems und mindestens ein Anschluss an einen Bypasskanal ausgebildet sind, wobei in dem Thermostatventilgehäuse ein bewegbares thermostatisches Arbeitselement, ein Kühlerventil, ein Motorblockventil sowie ein Schieber zum Verschließen des Bypasskanals angeordnet sind, wobei ein erster Schieberabschnitt zum Verschließen einer am Thermostatventilgehäuse angeordneten ersten Öffnung und mindestens ein zweiter Schieberabschnitt zum Verschließen mindestens einer am Thermostatventilgehäuse angeordneten zweiten Öffnung vorgesehen sind. Die erste und die zweite Öffnung liegen im Bereich des Bypasskanals und verbinden diesen mit einem Thermostatventilinnenraum, der von dem Thermostatventilgehäuse umgeben ist. Im Zusammenspiel des ersten und des zweiten Schieberabschnitts können somit die erste und die zweite Öffnung im Thermostatventilgehäuse und somit der Anschluss zum Bypasskanal zumindest abschnittsweise verschlossen werden. Das Kühlsystem ist bevorzugt ein Splitcooling-Kühlsystem für eine Motoreintrittsregelung und/oder für eine Motoraustrittsregelung, beispielsweise für einen Verbrennungsmotor. Ein Splitcooling-Kühlsystem weist jeweils einen separaten Kühlkreislauf für den Motorblock und den Zylinderkopf auf. Bei der Motoreintrittsregelung ist der Anschluss zu dem Zylinderkopf und zu dem Motorblock sowie von dem Kühlmittelkühler und von dem Bypasskanal vorgesehen. Bei der Motoraustrittsregelung ist der Anschluss von dem Zylinderkopf und von dem Motorblock sowie zu dem Kühlmittelkühler und zu dem Bypasskanal vorgesehen. Der Bypasskanal wird auch als Kurzschlusskanal bezeichnet. Im Thermostatventil ist bevorzugt ein thermostatisches Arbeitselement angeordnet, welches ein Dehnstoffelement aufweist, bevorzugt ein Dehnstoffwachselement. Das Dehnstoffelement, welches im Innern des Arbeitselementes angeordnet ist, wird immer von ausströmendem Kühlmittel umflossen und hat einen als Funktion der Temperatur bewegbaren Arbeitskolben. Insbesondere können bei Überschreitung einer eingestellten Temperatur mit dem Arbeitskolben in Wirkverbindung stehende Ventilteller und/oder Schieber geöffnet oder geschlossen werden. So kann am Motor eine Mischung aus Kurzschluss- und Kühlmittelkühlerflüssigkeit entstehen. Erst wenn nur noch heiße Kühlmittelflüssigkeit ankommt, öffnet das Thermostatventil dauerhaft. Auf diese Art und Weise kann eine optimale Kühlung des Motors gewährleistet und eine plötzliche Abkühlung eines oder mehrerer Zylinder des Motors verhindert werden. Somit besteht ein Vorteil des Thermostatventils gemäß der Erfindung darin, dass für ein Splitcooling-Kühlsystem ein einziges Thermostatventil geschaffen wurde, welches die Funktion der bisher verwendeten zwei Kühlmittelthermostate, die jeweils an einen Teilkühlmittelkreislauf des Zylinderkopfes und einen Teilkühlmittelkreislauf des Motorblockes angeschlossen sind, ersetzten kann. Dadurch ist es bei begrenztem Bauraum ermöglicht, mit einer Öffnung im Thermostatventil eine adäquate Bypassfläche des Bypassanschlusses zu verschließen.

In einer Ausgestaltung des Thermostatventils sind die erste und die mindestens zweite Öffnung in Längserstreckungsrichtung des Thermostatventilgehäuses gesehen in unterschiedlicher Höhe des Thermostatventilgehäuses angeordnet. Die erste und die mindestens zweite Öffnung bilden somit mindestens zwei kaskadenförmige Öffnungen. Dies ist vorteilhaft, da die geforderte Durchflussmenge bei unverändert kleinem Verstellhub des Schiebers erzielt werden kann. Somit kann eine sehr kompakte Bauform realisiert werden und das Thermostatventil in einem engen Bauraum eines Motorraums des Kraftfahrzeuges eingesetzt werden. Es können auch mehr als zwei Öffnungen vorgesehen sein, wobei dann die entsprechende Anzahl von Schieberabschnitten ausgebildet werden muss.

In einer bevorzugten Ausgestaltung des Thermostatventils weist der Schieber mindestens einen Schieberdurchbruch auf. Der Schieberdurchbruch realisiert in einem ansonsten einstückig ausgeführten Schieber den ersten und den zweiten Schieberabschnitt. Der Schieberdurchbruch kann unterschiedliche geometrische Ausgestaltungen aufweisen, die wiederum eine unterschiedliche Geometrie des ersten und zweiten Schieberabschnitts zur Folge haben. Bevorzugt sind die erste und die zweite Öffnung, die am Thermostatventilgehäuse ausgebildet sind, schlitzförmig ausgestaltet. Hierbei haben dann der erste und der zweite Schieberabschnitt eine im Wesentlichen rechteckige Gestalt. Die erste und die zweite Öffnung im Thermostatventilgehäuse können auch rund, elliptisch oder eine andere Gestalt aufweisen. Bevorzugt ist die Gestalt der Öffnungen aber so ausgelegt, das an jeder der Öffnungen mindestens eine Steuerkante gebildet wird. Mittels der Steuerkante kann das Schließen der ersten und/oder zweiten Öffnung über die jeweilige Steuerkante erfolgen, bevorzugt parallel erfolgen. Es können auch zwei oder mehr Schieberdurchbrüche vorgesehen sein, die dann drei oder mehr Schieberabschnitte ausbilden, mit denen die drei oder mehr Öffnungen verschlossen werden können.

In einer bevorzugten Ausgestaltung des Thermostatventils ist ein Überdruckventil vorgesehen. Mittels des Überdruckventils kann eine druckabhängige Öffnung im Thermostatventil realisiert werden. In einer bevorzugten Ausführungsform ist das Überdruckventil in das Motorblockventil oder den Motorblockanschluss integriert. Hierdurch wird die Möglichkeit einer druckabhängigen Öffnung zusätzlich zur temperaturabhängigen Öffnung mittels des thermostatischen Arbeitselementes bei konstruktiv einfacher, kompakter Bauform geschaffen. Dies ist vorteilhaft bei kalten Motortemperaturen, um den Durchfluss des Kühlmediums vom Anschluss an den Motorblock über die zwei Öffnungen am Thermostatventilgehäuse zum Bypasskanal zu erreichen.

Das Thermostatventil weist bevorzugt eine dem Kühlerventil zugeordnete erste Rückstellfeder, eine dem Motorblockventil zugeordnete zweite Rückstellfeder und/oder eine dritte dem Überdruckventil zugeordnete Rückstellfeder auf. Die Rückstellfedern können jeweils eine Rückstellkraft für den Ventilteller des jeweiligen Ventils bilden.

Ferner können am Thermostatventilgehäuse weitere Anschlüsse ausgebildet sein, mittels derer ein Heizungswärmetauscher und/oder ein Ausgleichsbehälter an das Thermostatventil anschließbar sind.

Die Aufgabe wird ebenfalls mittels eines Kühlsystems für einen Motor eines Kraftfahrzeuges, insbesondere einen Verbrennungsmotor, gelöst, in dem ein erfindungsgemäßes Thermostatventil vorgesehen ist, welches zwischen jeweils einem Anschluss eines Motorblocks, eines Zylinderkopfes, eines Bypasskanals und eines Kühlmittelkühlers des Kühlsystems angeordnet ist.

Der Betrieb des Kühlsystems, in dem ein Kühlmedium zirkuliert, mit dem erfindungsgemäßen Thermostatventil ermöglicht ein Verfahren zum Kühlen eines Motorblocks eines Verbrennungsmotors bei dem in Abhängigkeit von der jeweiligen Medientemperatur unterschiedliche Ventile in dem Thermostatventil geöffnet werden, wobei bei steigender Temperatur in einem ersten Schritt ein Motorblockventil geöffnet wird. Falls die Temperatur weiter ansteigt kann zusätzlich ein Kühlerventil geöffnet werden, sodass der Motor im Mischbetriebe betrieben werden kann, wobei die erste und die zweite Öffnung am Thermostatventilgehäuse mittels des Schiebers sukzessive verschlossen werden. Hierdurch kann ein Kühlmittelfluss über den Kühlmittelkühleranschluss an den Motorblock und an den Zylinderkopf erfolgen. Bevorzugt erfolgt das Verfahren mittels des thermostatischen Arbeitselementes des Thermostatventils, das eine Position des Schiebers mit einem ersten und einem zweiten Schieberabschnitt verändert und dadurch die mindestens zwei Öffnungen am Thermostatventilgehäuse zumindest abschnittsweise verschließt. Die mindestens zwei kaskadenförmigen Öffnungen sind hierbei bevorzugt derart ausgelegt, dass das Schließen der mindestens zwei Öffnungen über Steuerkanten im Schieber parallel und gleichzeitig erfolgt. Hierdurch können die beiden Öffnungen synchron verschlossen werden - komplett oder abschnittsweise. Das Splitcooling-Kühlsystem kann mit nur einem Thermostatventil anstatt der bisher verwendeten zwei Thermostatventile auskommen und ist dadurch preiswerter und kostengünstiger herstellbar. Vorteilhaft ist hierbei außerdem, dass im Kühlsystem weniger Kühlmittel eingesetzt werden muss.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Figuren der Zeichnung näher erläutert. Es zeigen:
- Fig. 1, Fig. 1a: ein Thermostatventil nach dem Stand der Technik,
- Fig. 2, Fig. 2a: ein erfindungsgemäßes Thermostatventil in einer ersten Ausführungsform in einem ersten Betriebszustand,
- Fig. 3, Fig. 3a: das erfindungsgemäße Thermostatventil von Figur 2 und 2a in einem zweiten Betriebszustand,
- Fig. 4, Fig. 4a: ein weiteres Ausführungsbeispiel eines erfindungsgemäßen Thermostatventils in einem ersten Betriebszustand,
- Fig. 5, Fig. 5a: das Thermostatventil von Figur 4 und 4a in einem zweiten Betriebszustand.

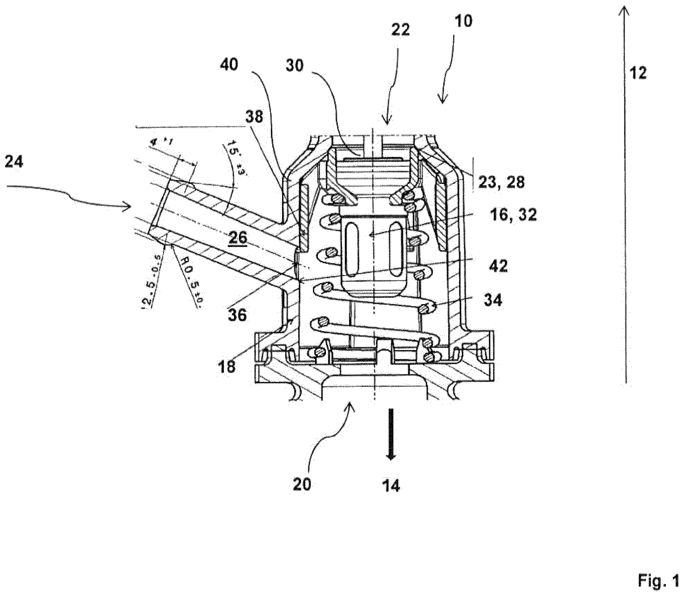

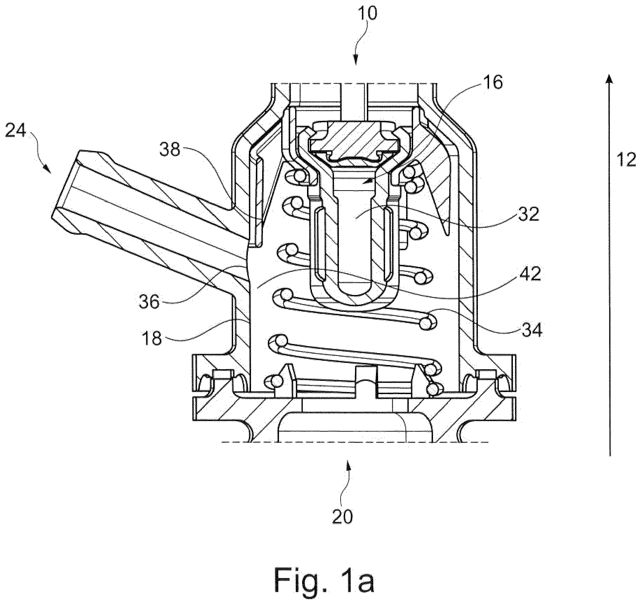

Die Thermostatventile 10, 44, 100, die in den Figuren 1 bis 5 gezeigt sind, sind in einer Schnittdarstellung gezeigt, wobei der Schnitt jeweils entlang einer Längserstreckungsrichtung 12 des jeweiligen Thermostatventils 10, 44 (erste Ausführungsform) und 100 (zweite Ausführungsform) gelegt ist.

Figur 1 zeigt das Thermostatventil 10 gemäß dem Stand der Technik. Im Thermostatventil 10 ist ein in einem Thermostatventilgehäuse 18 angeordnetes thermostatisches Arbeitselement 16 vorgesehen. Am Thermostatventilgehäuse 18 ist ein erster Anschluss 20 an einen Motorblock (nicht dargestellt) ausgebildet, der im Folgenden als Motorblockanschluss 20 bezeichnet wird. Ferner weist das Thermostatgehäuse 18 einen Anschluss 22 an einen Kühlmittelkühler (nicht dargestellt) auf, der als Kühlmittelkühleranschluss 22 oder Kühleranschluss 22 bezeichnet wird. Ein dritter Anschluss 24 dient der Verbindung mit einem Bypasskanal 26 und wird als Bypasskanalanschluss 24 bezeichnet. Das Thermostatventil 10 weist ferner ein Kühlerventil 28 mit einem Ventilteller 30 auf, mittels dem der Kühlmittelkühleranschluss 22 verschlossen werden kann. Das thermostatische Arbeitselement 16 weist ein Dehnstoffelement 32 auf und ist in einer Ausfahrrichtung 92 bzw. in Längserstreckungsrichtung 12 verfahrbar, wenn sich das Dehnstoffelement 32 ausdehnt. Bevorzugt ist das Dehnstoffelement 32 ein Dehnstoffwachselement 32 und weist eine Wachsmischung auf. Das Thermostatventil 10 weist ferner eine Rückstellfeder 34 zum Verlagern des Ventiltellers 30 und damit zum Verschließen des Kühlmittelkühleranschlusses 22 auf. Zwischen dem Bypasskanal 26 und dem Gehäuse 18 ist eine Öffnung 36 angeordnet, die mittels eines Schiebers 38 verschließbar ist. Der Schieber 38 ist im geöffneten Zustand des Bypasskanals im Wesentlichen parallel zu einem Wandabschnitt 40 des Gehäuses 18 angeordnet. Im geschlossenen Zustand ist der Schieber 38 bis an eine Steuerkante 42 parallel in Ausfahrrichtung 14 nach unten verschoben, sodass der Schieber 38 vor der Öffnung 36 und zwischen dem Wandabschnitt 40 und der Steuerkante 42 angeordnet ist. Figur 1a zeigt das Thermostatventil 10 gemäß dem Stand der Technik in einer anderen Schnittebene entlang der Längserstreckungsrichtung 12, in der das Dehnstoffelement 32 erkennbar ist. Identische Gegenstände sind mit den gleichen Bezugszeichen bezeichnet.

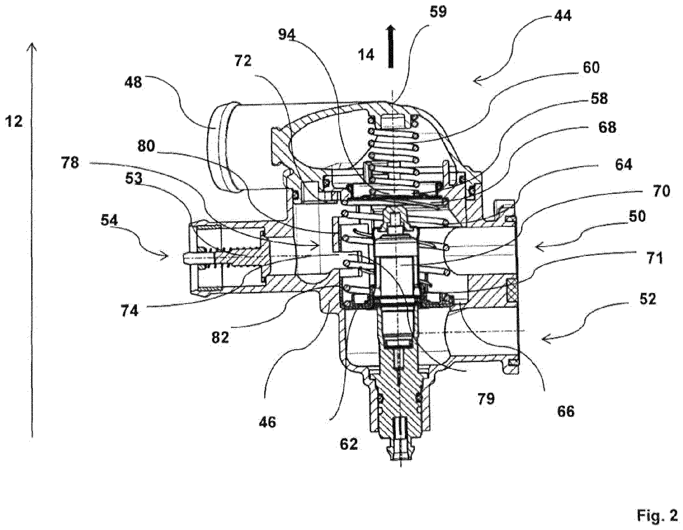

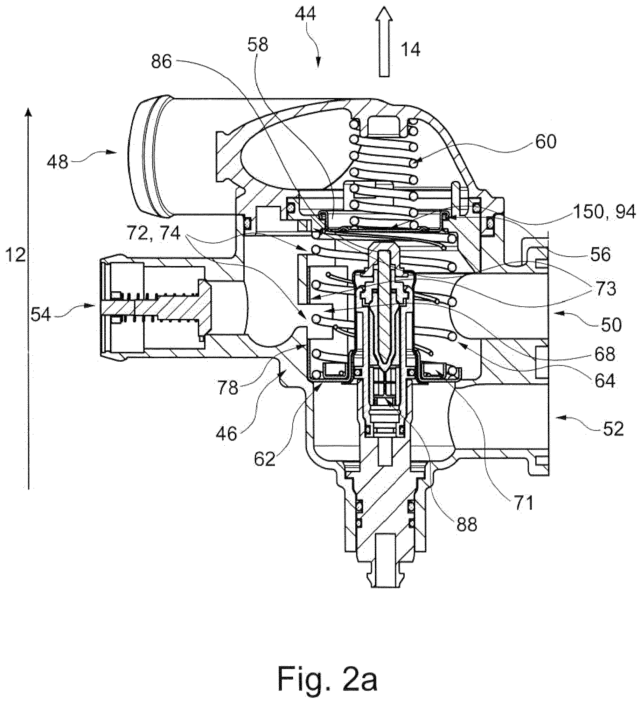

Figur 2 zeigt ein erstes Ausführungsbeispiel eines erfindungsgemäßen Thermostatventils 44. Das Thermostatventil 44 liegt in einem ersten Betriebszustand vor, der einen Hub von 0 mm aufweist. Das Thermostatventil 44 weist ein Thermostatventilgehäuse 46 auf, an dem ein Anschluss 48 zum Verbinden mit einem Kühlmittelkühler (nicht dargestellt) am Gehäuseabschnitt 59 ausgebildet ist, der als Kühleranschluss 48 bezeichnet wird. Ein weiterer am Thermostatventilgehäuse 46 ausgebildeter Anschluss 50 ist mit einem Zylinderkopf (nicht dargestellt) verbindbar und wird als Zylinderkopfanschluss 50 bezeichnet. Mit einem nicht dargestellten Motorblock ist ein Motorblockanschluss 52 verbindbar. Rotationssymmetrisch gesehen auf der gegenüberliegenden Seite des Thermostatventilgehäuses 46 ist ein Bypassanschluss 54 angeordnet, der mit einem Bypasskanal (nicht dargestellt) verbindbar ist und in dem ein Bypassventil 53 angeordnet ist. In dem in Figur 2 gezeigten Betriebszustand ist das Bypassventil 53 geschlossen.

Im Thermostatventilgehäuse 46 sind ferner ein Kühlmittelkühlerventli 56 oder Kühlerventil 56 mit einem Kühlerventilteller 58 zum Verschließen des Kühleranschlusses 48 angeordnet, welches mit einer Rückstellfeder 60, die gegen einen Gehäuseabschnitt 59 des Kühleranschlusses 48 abgestützt ist, in Wirkverbindung steht. Der Kühlerventilteller 58 kann sich gegen die Rückstellfeder 60 öffnen. Ferner ist im Thermostatventilgehäuse 46 ein Motorblockventil 62 und eine Rückstellfeder 64 angeordnet, die an einem mit dem Thermostatventilgehäuse 46 verbundenen Bauelement 66 abgestützt ist, und mit dem Motorblockventil 62 in Wirkverbindung steht. Eine dritte Rückstellfeder 68 ist rotationssymmetrisch um ein thermostatisches Arbeitselement 70 mit einem Dehnstoffelement 88 (dargestellt in Figur 2a) angeordnet. Im Thermostatventilgehäuse 46 ist ferner ein Überdruckventil 71 angeordnet.

Der Bypassanschluss 54 weist eine erste Öffnung 72 und eine zweite Öffnung 74 auf, die von einem Gehäuseelement 76 getrennt sind. Die erste und die zweite Öffnung 72, 74 können jeweils mittels eines Schiebers 78 mit einem ersten Schieberabschnitt 80 und einem zweiten Schieberabschnitt 82 verschlossen werden, indem der erste Schieberabschnitt 80 vor die erste Öffnung 72 und der zweite Schieberabschnitt 82 vor die zweite Öffnung 74 bewegt wird. Der erste Schieberabschnitt 80 und der zweite Schieberabschnitt 82 werden ausgebildet, indem im Bereich des Bypassanschlusses 54 ein Schieberdurchbruch 79 derart am Schieber 78 angeordnet ist, dass der erste Schieberabschnitt 80 und der zweite Schieberabschnitt 82 ausgebildet werden. Der in Figur 2 gezeigte Betriebszustand zeigt einen geöffneten Bypassanschluss 54, bei dem der erste und der zweite Schieberabschnitt 80, 82 jeweils außerhalb der ersten und der zweiten Öffnung 72, 74 angeordnet sind, bevorzugt parallel zu einem Wandabschnitt 40 des Thermostatventilgehäuses 46 angeordnet sind. Durch die Öffnungen 72, 74 kann Kühlmittel strömen.

Figur 2a zeigt das Thermostatventil 44 von Figur 2, wobei das thermostatische Arbeitselement 70 in Schnittdarstellung entlang der Längserstreckungsrichtung 12 gezeigt ist. Das thermostatische Arbeitselement 70 weist ein Gehäuse 84 mit einem deckelartigen Abschnitt 86 auf. In dem Gehäuse 84 ist ein Dehnstoffelement 88, beispielsweise ein Wachselement aufweisend eine Wachsmischung angeordnet. Ein derartiges Dehnstoffelement 88 wird auch als Dehnstoffwachselement 88 bezeichnet. Der Dehnstoff, insbesondere das Wachs verändert temperaturabhängig sein Volumen und treibt bei einer entsprechenden Temperaturerhöhung einen Arbeitskolben 90 aus dem Gehäuse 84. Beim Ausfahren kann der Arbeitskolben 90 den Schieber 78 mitnehmen und in seiner Position verlagern. Somit kann der Bypassanschluss 54 zumindest teilweise geschlossen werden. Außerdem kann der Arbeitskolben 90 ebenfalls den Kühlerventilteller 58 und das Motorblockventil 62 in ihrer Position verändern. Die Funktionsweise des thermostatischen Arbeitselementes 70 wird nach der Beschreibung der Figuren 2 bis 5 für die erste Ausführungsform und die zweite Ausführungsform des Thermostatventils 44, 100 erläutert.

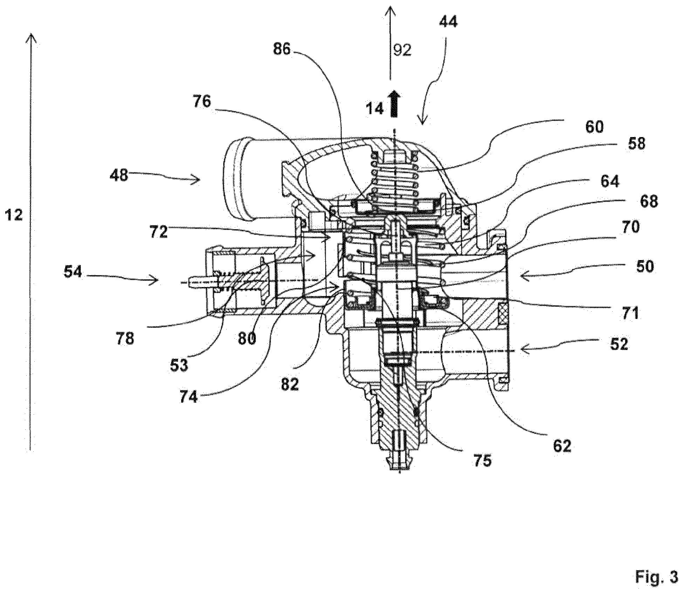

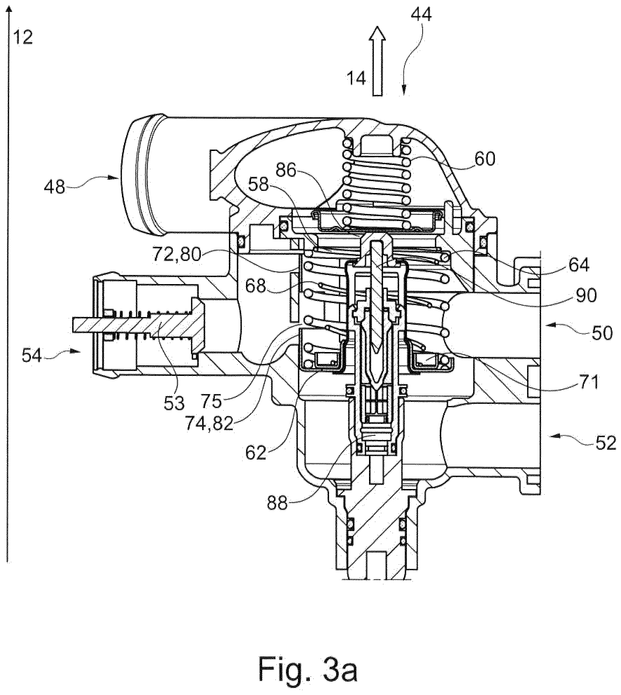

Figur 3 zeigt die erste Ausführungsform des erfindungsgemäßen Thermostatventils 44 in einem zweiten Betriebszustand mit einem Hub von ca. 5 mm. Identische Gegenstände sind in den Figuren 2, 2a 3, 3a, 4 und 5 mit den gleichen Bezugszeichen versehen. Im Unterschied zur Darstellung in den Figuren 2 und 2a ist der Schieber 78 in Ausfahrrichtung 92 des Arbeitselementes 70 bewegt und der erste Schieberabschnitt 80 verschließt die Öffnung 72, der zweite Schieberabschnitt 82 verschließt die Öffnung 74 des Bypassanschlusses 54. Das Bypassventil 53 ist in dem zweiten Betriebszustand zumindest abschnittsweise geöffnet.

Figur 3a zeigt das Thermostatventil 44 ebenfalls in dem zweiten Betriebszustand wie Figur 3, wobei die Position des Arbeitselementes 70 verdeutlicht ist und das Dehnstoffelement 88 und der Arbeitskolben 90 erkennbar sind.

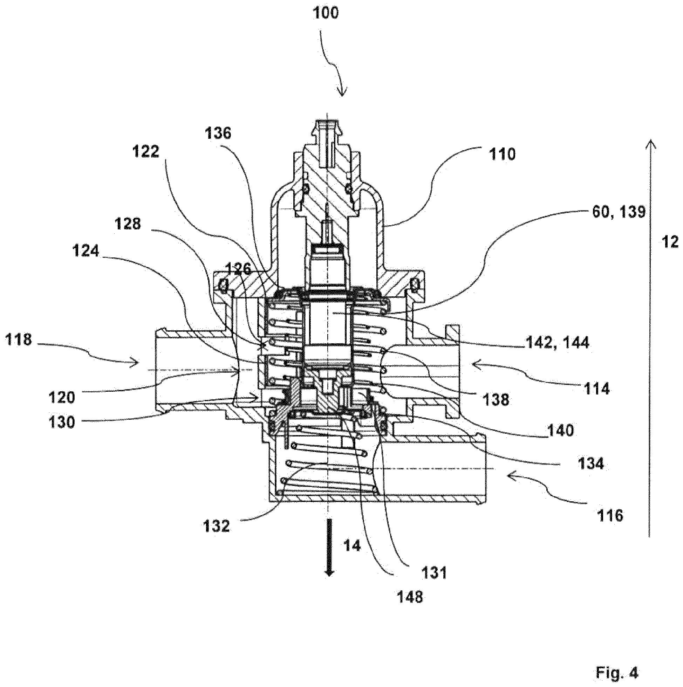

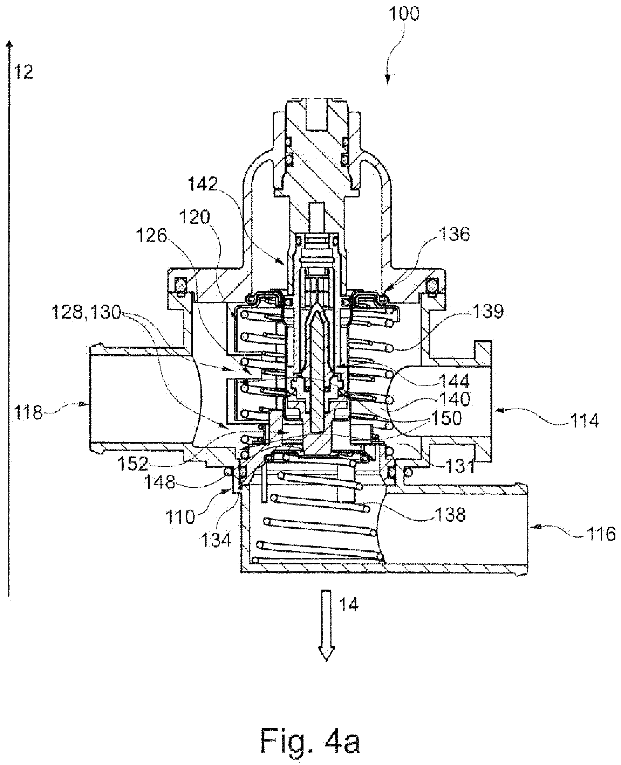

Figur 4 zeigt eine zweite Ausführungsform eines erfindungsgemäßen Thermostatventils 100. Das Thermostatventil 100 weist ein Thermostatventilgehäuse 110 auf, an dem ein Anschluss 112 für einen Kühlmittelkühler (nicht dargestellt) angeordnet ist, der als Kühleranschluss 112 bezeichnet wird. Ferner sind ein Zylinderkopfanschluss 114 zum Verbinden von oder zum Anschluss an einen Zylinderkopf (nicht dargestellt) und ein Motorblockanschluss 116 zum Anschluss an einen Motorblock (nicht dargestellt) sowie ein Bypassanschluss 118 zum Anschluss an einen Bypasskanal (nicht dargestellt) vorgesehen. Der Bypassanschluss 118 ist mit einem Schieber 120 verschließbar, der einen ersten Schieberabschnitt 122 und einen zweiten Schieberabschnitt 124 aufweist, die durch einen Durchbruch 126 an dem Schieber 120 realisiert sind und derart eingerichtet sind, dass der erste Schieberabschnitt 122 eine erste Öffnung 128 verschließen kann und der zweite Schieberabschnitt 124 eine zweite Öffnung 130 verschließen kann. Hierbei bilden die erste Öffnung 128 und die zweite Öffnung 130 kaskadenförmige Öffnungen, die auf einer vertikalen Achse 132 des Thermostatventils 100 geodätisch untereinander angeordnet sind. Es kann auch vorgesehen sein, die erste und die zweite Öffnung 130, 132 versetzt zueinander entlang der vertikalen Achse 132 anzuordnen.

Ferner sind ein Motorblockventil 134 und ein Kühlerventil 136 in dem Thermostatventilgehäuse 110 angeordnet. Das Motorblockventil 134 steht in Wirkverbindung mit einer ersten Rückstellfeder 138 und das Kühlerventil 134 steht in Wirkverbindung mit einer zweiten Rückstellfeder 139. Ferner ist eine dritte Rückstellfeder 140 vorgesehen, die in Wirkverbindung mit einem Überdruckventil 131 steht. Das Überdruckventil 131 ist bevorzugt in unmittelbarer Nähe des Motorblockventils 134 angeordnet oder in dieses integriert. Ein thermostatisches Arbeitselement 142 mit einem Dehnstoffelement 144 (dargestellt in Figur 4a) und einem Arbeitskolben 146 sowie einem Mitnehmer 148 ist zentral, bevorzugt auf der Achse 132 im Thermostatventilgehäuse 110 angeordnet und hat die Funktion die Ventile 134 und 136 sowie den Schieber 120 als Funktion der Temperatur zu steuern. Dies kann realisiert werden, da das Volumen des Dehnstoffelementes 144 durch die Temperatur beeinflusst wird und damit die Position des Arbeitskolbens 146 und des Mitnehmers 148 verändert werden kann.

Figur 4a zeigt die zweite Ausführungsform des Thermostatventils 100 von Figur 4. Identische Gegenstände sind mit gleichen Bezugszeichen bezeichnet. In der Schnittdarstellung sind das Dehnstoffelement 144 und der Arbeitskolben 146 gezeigt, die in der Darstellung von Figur 4 nicht erkennbar sind, sowie der Mitnehmer 148.

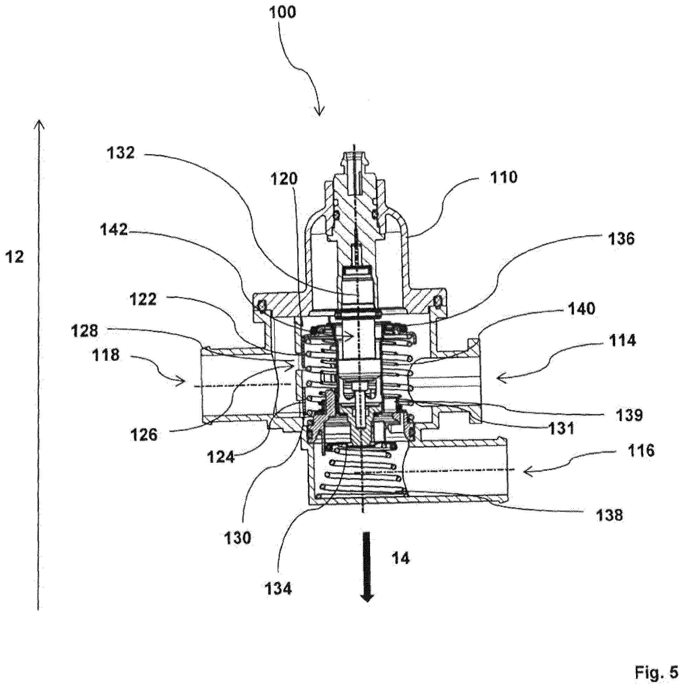

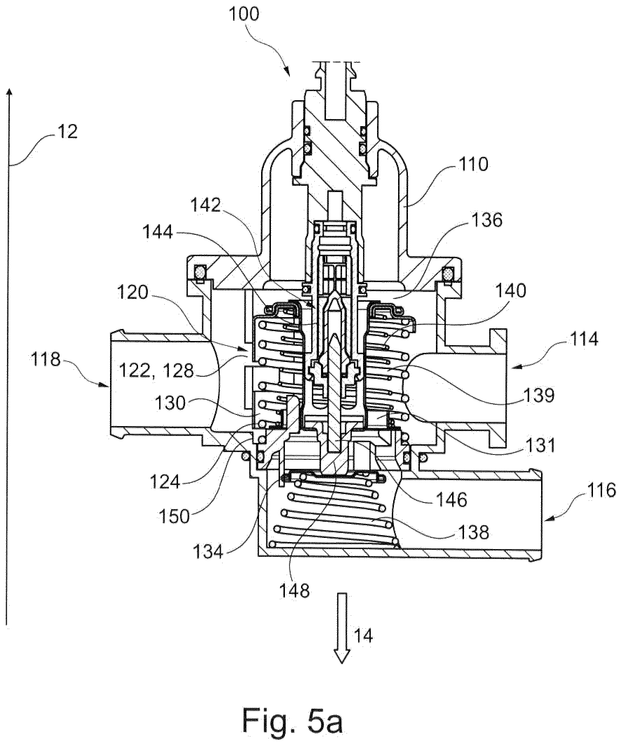

Figur 5 zeigt das Thermostatventil 100 in einem zweiten Betriebszustand, in dem eine andere, höhere Temperatur vorliegt, bei der das Volumen des Dehnstoffelements 144 vergrößert vorliegt, wodurch der Arbeitskolben 146 ausgefahren ist und die Positionen des Schiebers 120, des Motorblockventils 134 sowie des Kühlerventils 136 relativ zum Thermostatventilgehäuse 110 verschoben sind. Die Verschiebung ist hierbei entgegen der Richtung der Längserstreckungsrichtung 12 des Thermostatventils 100 erfolgt.

Es kann bei beiden Ausführungsformen des Thermostatventils 44 und 100 vorgesehen sein, das thermostatische Arbeitselement 70, 142 und/oder das Dehnstoffelement 88, 144 in einer um 180° versetzten Position im Thermostatventilgehäuse 46, 110 anzuordnen.

Im Folgenden werden die Funktion und die Wirkungsweise der Thermostatventile 44 und 100 erläutert. Die Bezugszeichen bezeichnen jeweils die erste und die zweite Ausführungsform, wobei die Bezugszeichen der Gegenstände der ersten Ausführungsform immer zuerst genannt sind.

Ausgangssituation ist ein kalter Motor, bevorzugt ein Verbrennungsmotor. Bei kaltem Motor sind der Kühleranschluss 48, bzw. 112 und der Motorblockanschluss 52 bzw. 116 durch das Kühlerventil 56 bzw. 136 und das Motoblockventil 62 bzw. 134 verschlossen. Dies erfolgt indem die Rückstellfedern 60 bzw. 139 und 64, bzw. 138 auf die jeweiligen Ventile 56, 136 sowie 62, 134 eine Rückstellkraft ausüben. Der Zylinderkopfanschluss 50, 114 und der Bypassanschluss 54, 118 sind offen und das Kühlmedium kann an den Zylinderkopf gelangen. Bei steigender Temperatur des Kühlmediums im Zylinderkopf, wird zunächst das Motorblockventil 62, 134 mittels des Arbeitskolbens 90, 146 und des Mitnehmers 91,148 des thermostatischen Arbeitselementes 70, 142 geöffnet. Bei weiter steigender Temperatur des Kühlmediums wird das Kühlerventil 56, 136 nach einem Leerhub 94,150 jeweils gegen die zweite Rückstellfeder 60, 139 geöffnet. Hierdurch kann das Kühlmedium über den Bypassanschluss 54, 118 und über den Kühleranschluss 48, 112 an den Motorblock und an den Zylinderkopf gelangen. Der Motor wird im Mischbetrieb betrieben. Gleichzeitig werden die erste Öffnung 72, 128 und die zweite Öffnung 74, 130 im Thermostatventilgehäuse 46, 110 mittels des ersten Schieberabschnittes 80, 122 und des zweiten Schieberabschnittes 82, 124 des Schiebers 78, 120 zumindest abschnittsweise verschlossen. Das Verschließen der ersten und zweiten Öffnung 72, 128 und 74, 130 erfolgt hierbei stufenweise je nach anliegender Kühlmediumtemperatur bis bei ansteigender Temperatur die Öffnungen 72, 128 und 74, 130 über Steuerkanten 75 und 152 komplett verschlossen sind. Sind die Öffnungen 72, 74 bzw. 128, 130 komplett verschlossen kann ein Durchfluss des Kühlmedium an den Motorblock und den Zylinderkopf lediglich über den Kühleranschluss 48, 112 erfolgen. Der Motor wird im Kühlerbetrieb betrieben.

Fällt die Temperatur, wird das Kühlerventil 56, 136 durch die zweite Rückstellfeder 60, 139 verschlossen und gleichzeitig die erste Öffnung 72, 128 und die zweite Öffnung 74, 130 durch Verfahren des ersten Schieberabschnitts 80, 122 und des zweiten Schieberabschnitts 82, 124 zumindest abschnittsweise geöffnet. Anschließend wird das Motorblockventil 62, 134 geschlossen. Der Durchfluss des Kühlmediums kann nur noch über den Zylinderkopfanschluss 50, 114 und über den Bypassanschluss 54, 118 erfolgen. Hierbei erfolgt das Schließen und Öffnen der jeweiligen Ventile durch ein Zusammenspiel der Rückstellfedern und des thermostatischen Arbeitselementes 70, 142, dessen Dehnstoffelement 88, 144 sich bei steigender Temperatur ausdehnt und bei sinkender Temperatur zusammenzieht. Zusätzlich zu dem Motorblockventil 62, 134, dem Kühlerventil 56, 136 und dem Schieber 78, 120, die mit dem thermostatischen Arbeitselement 70, 142 gesteuert werden, ist bevorzugt jeweils ein Überdruckventil 71 und 131 eingesetzt, welches eine druckabhängige Öffnung ermöglicht, die insbesondere bei kalten Motortemperaturen einen Durchfluss des Kühlmediums vom Motorblockanschluss 52, 116 über die erste und die zweite Öffnung 72, 128 und 74, 130 in den Bypasskanal ermöglicht.

## Patentansprüche

1. Thermostatventil für ein Kühlsystem eines Motors eines Kraftfahrzeugs mit einem Thermostatventilgehäuse (46, 110), an dem ein Zylinderkopfanschluss (50, 114) zum Anschluss an einen Zylinderkopf des Motors, ein Motorblockanschluss (52, 116) zum Anschluss an einen Motorblock, ein Kühleranschluss (48, 112) zum Anschluss an einen Kühler des Kühlsystems und mindestens ein Bypasskanalanschluss (54, 118) zum Anschluss an einen Bypasskanal ausgebildet sind, wobei in dem Thermostatventilgehäuse (46, 110) ein bewegbares thermostatisches Arbeitselement (70, 142), ein Kühlerventil (56, 136), ein Motorblockventil (62, 134) sowie ein Schieber (78, 120) zum Verschließen des Bypasskanals angeordnet sind, **dadurch gekennzeichnet, dass** ein erster Schieberabschnitt (80, 122) zum Verschließen einer am Thermostatventilgehäuse (46, 110) angeordneten ersten Öffnung (72, 128) und mindestens ein zweiter Schieberabschnitt (82, 124) zum Verschließen mindestens einer am Thermostatventilgehäuse (46, 110) angeordneten zweiten Öffnung (74, 130) vorgesehen sind.

2. Thermostatventil nach Anspruch 1, **dadurch gekennzeichnet, dass** das bewegbare thermostatische Arbeitselement (70, 142) in dem Thermostatventilgehäuse (46, 110) ein Dehnstoffelement (88, 144) aufweist, bevorzugt ein Dehnstoffwachselement (88, 144) und einen Arbeitskolben (90, 146).

3. Thermostatventil nach Anspruch 1 oder 2, **dadurch gekennzeichnet, dass** die erste Öffnung (72, 128) und die mindestens zweite Öffnung (74, 130) in Längserstreckungsrichtung (12) des Thermostatventilgehäuses (46, 110) gesehen in unterschiedlicher Höhe des Thermostatventilgehäuses (46, 110) angeordnet sind.

4. Thermostatventil nach einem der Ansprüche 1 bis 3, **dadurch gekennzeichnet, dass** der Schieber (78, 120) mindestens einen Schieberdurchbruch (79, 126) aufweist.

5. Thermostatventil nach einem der Ansprüche 1 bis 4, **dadurch gekennzeichnet, dass** die erste Öffnung (72, 128) und/oder die zweite Öffnung (74, 130) schlitzförmig ausgebildet sind.

6. Thermostatventil nach einem der Ansprüche 1 bis 5, **dadurch gekennzeichnet, dass** ein Überdruckventil (71, 131) vorgesehen ist.

7. Thermostatventil nach Anspruch 6, **dadurch gekennzeichnet, dass** das Überdruckventil (71, 131) in das Motorblockventil (62, 134) und/oder den Motorblockanschluss (52, 116) integriert ist.

8. Thermostatventil nach einem der Ansprüche 1 bis 7, **dadurch gekennzeichnet, dass** eine dem Kühlerventil (56, 136) zugeordnete zweite Rückstellfeder (60, 139), eine dem Motorblockventil (62, 134) zugeordnete erste Rückstellfeder (64, 138) und/oder eine dritte dem Überdruckventil (71, 131) zugeordnete Rückstellfeder (68, 140) vorgesehen sind.

9. Thermostatventil nach einem der Ansprüche 1 bis 8, **dadurch gekennzeichnet, dass** weitere Anschlüsse am Thermostatventilgehäuse (46, 110) ausgebildet sind, mittels derer ein Heizungswärmetauscher oder ein Ausgleichsbehälter an das Thermostatventilgehäuse (46, 110) anschließbar sind.

10. Kühlsystem für einen Motor eines Kraftfahrzeuges, insbesondere Verbrennungsmotors, **dadurch gekennzeichnet, dass** ein Thermostatventil (44, 100) gemäß einem der Ansprüche 1 bis 9 vorgesehen ist, welches jeweils zwischen einem Anschluss eines Motorblocks (52, 116), eines Kühlmittelkühlers (48, 112) des Kühlsystems, eines Anschlusses (50, 114) eines Zylinderkopfes und eines Bypasskanals (54, 118) angeordnet ist.

## Claims

1. A thermostatic valve for a cooling system of a motor vehicle engine, with a thermostatic valve housing (46, 110) on which a cylinder head connection (50, 114) for the connection to a cylinder head of the engine, an engine block connection (52, 116) for the connection to an engine block, a radiator connection (48, 112) for the connection to a radiator of the cooling system and at least one bypass channel connection (54, 118) for the connection to a bypass channel are formed, wherein a movable thermostatic operating element (70, 142), a radiator valve (56, 136), an engine block valve (62, 134) and a slide (78, 120) for closing the bypass channel are disposed in the thermostatic valve housing (46, 110), **characterised in that** a first slide section (80, 122) for closing a first opening (72, 128) arranged on the thermostatic valve housing (46, 110) and at least one second slide section (82, 124) for closing at least one second opening (74, 130) arranged on the thermostatic valve housing (46, 110) are provided.

2. The thermostatic valve according to claim 1, **characterised in that** the movable thermostatic operating element (70, 142) in the thermostatic valve housing (46, 110) has an expansion element (88, 144), preferably an expanding wax element (88, 144), and a working piston (90, 146).

3. The thermostatic valve according to claim 1 or 2, **characterised in that** the first opening (72, 128) and the at least second opening (74, 130), when viewed in the longitudinal extension direction (12) of the thermostatic valve housing (46, 110), are located at different heights of the thermostatic valve housing (46, 110) .

4. The thermostatic valve according to one of claims 1 to 3, **characterised in that** the slide (78, 120) has at least one slide aperture (79, 126).

5. The thermostatic valve according to one of claims 1 to 4, **characterised in that** the first opening (72, 128) and/or the second opening (74, 130) are formed slot-shaped.

6. The thermostatic valve according to one of claims 1 to 5, **characterised in that** a pressure relief valve (71, 131) is provided.

7. The thermostatic valve according to claim 6, **characterised in that** the pressure relief valve (71, 131) is integrated into the engine block valve (62, 134) and/or the engine block connection (52, 116).

8. The thermostatic valve according to one of claims 1 to 7, **characterised in that** a second return spring (60, 139) assigned to the radiator valve (56, 136), a first return spring (64, 138) assigned to the engine block valve (62, 134) and/or a third return spring (68, 140) assigned to the pressure relief valve (71, 131) are provided.

9. The thermostatic valve according to one of claims 1 to 8, **characterised in that** other connections, by means of which a heating heat exchanger or an equalising tank can be connected to the thermostatic valve housing (46, 110), are formed on the thermostatic valve housing (46, 110).

10. A cooling system for a motor vehicle engine, particularly an internal combustion engine, **characterised in that** a thermostatic valve (44, 100) according to one of claims 1 to 9 is provided, which is disposed in each case between a connection of an engine block (52, 116), a coolant radiator (48, 112) of the cooling system, a connection (50, 114) of a cylinder head, and a bypass channel (54, 118).

## Revendications

1. Vanne thermostatique pour un système de refroidissement d'un moteur d'un véhicule automobile, ladite vanne thermostatique comprenant un corps de vanne thermostatique (46, 110) sur lequel sont formés un raccord de culasse (50, 114) servant au raccordement à une culasse du moteur, un raccord de bloc-moteur (52, 116) servant au raccordement à un bloc-moteur, un raccord de radiateur (48, 112) servant au raccordement à un radiateur du système de refroidissement et au moins un raccord de conduit de dérivation (54, 118) servant au raccordement à un conduit de dérivation, où sont disposés, dans le corps (46, 110) de la vanne thermostatique, un élément de travail thermostatique mobile (70, 142), une vanne de radiateur (56, 136), une soupape de bloc-moteur (62, 134) ainsi qu'une vanne à tiroir (78, 120) servant à la fermeture du conduit de dérivation, **caractérisée en ce qu'**il est prévu une première partie (80, 122) de la vanne à tiroir servant à la fermeture d'une première ouverture (72, 128) disposée sur le corps (46, 110) de la vanne thermostatique et au moins une deuxième partie (82, 124) de la vanne à tiroir servant à la fermeture d'au moins une deuxième ouverture (74, 130) disposée sur le corps (46, 110) de la vanne thermostatique.

2. Vanne thermostatique selon la revendication 1, **caractérisée en ce que** l'élément de travail thermostatique mobile (70, 142) présente, dans le corps (46, 110) de la vanne thermostatique, un élément de dilatation (88, 144), de préférence un élément de dilatation en cire (88, 144), et un piston de travail (90, 146).

3. Vanne thermostatique selon la revendication 1 ou 2, **caractérisée en ce que** la première ouverture (72, 128) et celle formant au moins la deuxième ouverture (74, 130), vues dans la direction d'étendue longitudinale (12) du corps (46, 110) de la vanne thermostatique, sont disposées à un niveau de hauteur différent du corps (46, 110) de la vanne thermostatique.

4. Vanne thermostatique selon l'une quelconque des revendications 1 à 3, **caractérisée en ce que** la vanne à tiroir (78, 120) présente au moins une percée (79, 126) de la vanne à tiroir.

5. Vanne thermostatique selon l'une quelconque des revendications 1 à 4, **caractérisée en ce que** la première ouverture (72, 128) et / ou la deuxième ouverture (74, 130) sont configurées en forme de fente.

6. Vanne thermostatique selon l'une quelconque des revendications 1 à 5, **caractérisée en ce qu'**il est prévu une soupape de surpression (71, 131).

7. Vanne thermostatique selon la revendication 6, **caractérisée en ce que** la soupape de surpression (71, 131) est intégrée dans la soupape (62, 134) du bloc-moteur et / ou dans le raccord (52, 116) du bloc-moteur.

8. Vanne thermostatique selon l'une quelconque des revendications 1 à 7, **caractérisée en ce qu'**il est prévu un deuxième ressort de rappel (60, 139) associé à la vanne de radiateur (56, 136), un premier ressort de rappel (64, 138) associé à la soupape (62, 134) du bloc-moteur et / ou un troisième ressort de rappel (68, 140) associé à la soupape de surpression (71, 131).

9. Vanne thermostatique selon l'une quelconque des revendications 1 à 8, **caractérisée en ce que** d'autres raccords sont formés sur le corps (46, 110) de la vanne thermostatique, raccords au moyen desquels un échangeur de chaleur de chauffage ou un vase d'expansion peut être raccordé au corps (46, 110) de la vanne thermostatique.

10. Système de refroidissement pour un moteur d'un véhicule automobile, en particulier pour un moteur à combustion interne, **caractérisé en ce qu'**il est prévu une vanne thermostatique (44, 100) selon l'une quelconque des revendications 1 à 9, vanne thermostatique qui est disposée à chaque fois entre un raccord d'un bloc-moteur (52, 116), d'un radiateur à liquide de refroidissement (48, 112) du système de refroidissement, entre un raccord (50, 114) d'une culasse et d'un conduit de dérivation (54, 118).
